# DEMANDE DE BREVET EUROPEEN

(11) **EP 1 624 316 A1**
(43) Date de publication de la demande: **08.02.2006**
(21) Numéro de dépôt: 05106872.4
(22) Date de dépôt: 26.07.2005
(51) Int. Cl.: G01S 5/00

(54) **Procédé de localisation d'un terminal mobile**

(30) Priorité: 05.08.2004 FR 0408658
(71) Demandeur: ALCATEL, 75008 Paris (FR)
(72) Inventeur: DAURENSAN, Véronique, 92160, ANTONY (FR)
(74) Mandataire: Vigand, Régis Louis Michel

(57) **Abrégé**

L'invention concerne le domaine des procédés de localisation d'un terminal mobile avec affichage de sa position sur un autre terminal mobile.

C'est un procédé comprenant : une étape de communication entre un premier terminal mobile et un serveur, le premier terminal mobile fournissant au serveur le numéro d'un deuxième terminal mobile ; une étape de délimitation par le premier terminal mobile, d'au moins une zone autorisée de déplacement sur une carte d'un lieu ; une étape de localisation du deuxième terminal mobile par le serveur ; une étape d'affichage, sur l'écran du premier terminal mobile, d'une part d'au moins une partie de la carte et d'autre part de la position du deuxième terminal mobile sur la carte ; les étapes de localisation et d'affichage étant mises à jour au cours du temps ; une étape d'envoi, par le serveur, d'une alarme principale, au premier terminal mobile, lorsque le deuxième terminal mobile quitte la zone autorisée ; une étape d'envoi, par le serveur ou par le premier terminal mobile, d'une alarme secondaire sous la forme d'un message vocal, au deuxième terminal mobile, lorsque le deuxième terminal mobile quitte ou a quitté la zone autorisée.

L'invention peut être appliquée à la surveillance d'un enfant par l'un de ses parents.

## Description

L'invention concerne le domaine des procédés de localisation d'un terminal mobile avec affichage de sa position sur un autre terminal mobile. L'invention concerne aussi le serveur d'application et les terminaux mobiles destinés à la mise en oeuvre du procédé selon l'invention. Les terminaux mobiles permettent la transmission et la réception de messages vocaux ; ce sont préférentiellement des téléphones portables.

Selon un art antérieur, il est connu pour un premier terminal mobile d'appeler un deuxième terminal mobile pour demander au deuxième terminal mobile où il se situe. Un inconvénient est soit d'appeler très souvent, ce qui est pénible et inutile, soit d'appeler rarement et donc trop tard en cas de problème survenu à l'utilisateur du deuxième terminal mobile. Un autre inconvénient est que l'utilisateur du deuxième terminal mobile, si c'est un enfant très jeune par exemple, peut être incapable de décrire sa position, du moins avec précision, à celui de ses parents qui l'appelle pour savoir où il se trouve.

Selon un autre art antérieur, par exemple décrit dans le brevet anglais GB 2356098, il est connu l'affichage de la position d'un premier terminal mobile sur un deuxième terminal mobile et l'envoi d'une alarme lorsque le premier terminal mobile quitte une zone autorisée. Un inconvénient est que rien n'est prévu pour aider l'utilisateur du deuxième terminal mobile à réagir et à anticiper un problème qui pourrait survenir à l'utilisateur du premier terminal mobile après que l'utilisateur du premier terminal mobile ait quitté la zone autorisée.

D'autres arts antérieurs s'occupent de la localisation de l'utilisateur d'un terminal mobile, parmi lesquels, la demande de brevet européen EP 1359431, la demande de brevet européen EP 1351174, la demande de brevet européen EP1130888, le « Patent Abstract of Japan » JP 10281801, la demande de brevet américain US 2003/0201931.

L'invention se propose d'offrir un moyen rapide et efficace de réaction pour l'utilisateur du terminal mobile ayant reçu une alarme lorsque l'utilisateur de l'autre terminal mobile, dont le comportement a provoqué l'alarme, a quitté la zone autorisée.

Selon l'invention, il est prévu un procédé comprenant : une étape de communication entre un premier terminal mobile et un serveur, le premier terminal mobile fournissant au serveur le numéro d'un deuxième terminal mobile ; une étape de délimitation par le premier terminal mobile, d'au moins une zone autorisée de déplacement sur une carte d'un lieu ; une étape de localisation du deuxième terminal mobile ; une étape d'affichage, sur l'écran du premier terminal mobile, d'une part d'au moins une partie de la carte et d'autre part de la position du deuxième terminal mobile sur la carte ; les étapes de localisation et d'affichage étant mises à jour au cours du temps ; une étape d'envoi, par le serveur, d'une alarme principale, au premier terminal mobile, lorsque le deuxième terminal mobile quitte la zone autorisée ; une étape d'envoi, par le serveur ou par le premier terminal mobile, d'une alarme secondaire sous la forme d'un message vocal, au deuxième terminal mobile, lorsque le deuxième terminal mobile quitte ou a quitté la zone autorisée.

L'invention sera mieux comprise et d'autres particularités et avantages apparaîtront à l'aide de la description ci-après donnée à titre d'exemple.

Le procédé selon l'invention comprend plusieurs étapes, à savoir une étape de communication, une étape de délimitation, une étape de localisation, une étape d'affichage, et deux étapes d'envoi, ces étapes n'étant pas forcément successives et ces étapes n'étant pas forcément exécutées le même nombre de fois chacune lors du déroulement du procédé selon l'invention.

L'étape de communication est une étape de communication entre un premier terminal mobile et un serveur, le premier terminal mobile fournissant au serveur le numéro d'un deuxième terminal mobile. Dans l'exemple préférentiel mais non limitatif qui va maintenant être décrit, le deuxième terminal mobile est le terminal mobile d'un enfant, tandis que le premier terminal mobile est celui de l'un de ses parents. Le premier terminal mobile appelle le serveur et lui communique le numéro du deuxième terminal mobile pour que le serveur puisse localiser le deuxième terminal mobile et fournir cette localisation au premier terminal mobile. Cette étape de communication peut être initiée soit par le premier terminal mobile soit par le serveur lorsque celui-ci peut détecter l'entrée du premier terminal mobile et éventuellement d'un deuxième terminal mobile lié au premier terminal mobile dans un lieu ou le serveur peut proposer le procédé selon l'invention et lorsque ce procédé est susceptible d'intéresser le premier terminal mobile, c'est-à-dire lorsque le premier terminal mobile est accompagné dans le lieu d'un deuxième terminal mobile qui lui est associé, c'est-à-dire que le serveur sait être associé au premier terminal mobile : par exemple lorsque parent et enfant entrent dans un parc d'attractions. Inversement, le serveur peut proposer le procédé selon l'invention au premier terminal mobile lorsque celui-ci quitte la zone autorisée de déplacement mais que le deuxième terminal mobile lui y est resté dans la zone autorisée de déplacement : par exemple, lorsqu'un parent quitte sa maison en y laissant son enfant.

L'étape de délimitation est une étape de délimitation par le premier terminal mobile, d'au moins une zone autorisée de déplacement sur une carte d'un lieu. Le serveur va afficher une carte sur l'écran du premier terminal mobile, la carte représentant un lieu, et fournir au premier terminal mobile les moyens de choisir, de délimiter sur cette carte une zone autorisée de laquelle le deuxième terminal mobile n'est pas censé sortir. L'étape de délimitation peut soit être faite à chaque fois, soit avoir été mise en mémoire et être rappelée, éventuellement automatiquement, si le lieu considéré est un lieu de déplacement habituel pour le premier terminal mobile et pour le deuxième terminal mobile.

L'étape de localisation est une étape de localisation du deuxième terminal mobile de préférence par le serveur. Le serveur peut utiliser tout service annexe disponible pour parvenir à cette localisation, comme des stations de base, des bornes ou autres dispositifs. Le serveur n'a pas besoin de l'aide active du deuxième terminal mobile comme dans certains arts antérieurs, il suffit que le deuxième terminal mobile soit allumé, le deuxième terminal mobile pouvant n'être qu'en veille par exemple. Le deuxième terminal mobile peut aussi être doté d'un récepteur GPS par exemple.

L'étape d'affichage est une étape d'affichage, sur l'écran du premier terminal mobile, d'une part d'au moins une partie de la carte et d'autre part de la position du deuxième terminal mobile sur la carte. Le serveur affiche sur l'écran du premier terminal mobile, au moins une partie de la carte du lieu dans lequel se déplace le deuxième terminal mobile, ainsi que la position du deuxième terminal mobile sur cette partie de carte afin de permettre à l'utilisateur du premier terminal mobile de savoir où l'utilisateur du deuxième terminal mobile se trouve par un simple coup d'oeil sur l'écran du premier terminal mobile.

Les étapes de localisation et d'affichage sont mises à jour au cours du temps, pour que l'utilisateur du premier terminal mobile puisse suivre au cours du temps le déplacement de l'utilisateur du deuxième terminal mobile. Cette mise à jour peut être par exemple périodique, la valeur de la période pouvant dépendre à la fois de la vitesse de déplacement de l'utilisateur du deuxième terminal mobile et de l'étendue de la zone autorisée de déplacement pour l'utilisateur du deuxième terminal mobile. Pendant que les étapes de localisation et d'affichage sont en cours, une nouvelle étape de délimitation peut avoir lieu, par exemple si parent et enfant changent d'endroit dans le lieu à l'intérieur duquel ils se déplacent.

L'une des étapes d'envoi est une étape d'envoi, par le serveur, d'une alarme principale, au premier terminal mobile, lorsque le deuxième terminal mobile quitte la zone autorisée. Cette alarme est importante, car si le parent a besoin de ce service correspondant au procédé selon l'invention, c'est justement parce-qu'il ne peut pas garder constamment les yeux rivés sur son enfant, il peut par exemple vouloir lire un livre ou discuter avec une autre personne. Le parent doit donc être prévenu au plus tôt dès que l'enfant quitte la zone autorisée de déplacement, et de manière à sortir le parent de l'occupation dans laquelle il peut être absorbé : l'alarme est par exemple de type sonnerie, elle pourrait être de type SMS, mais c'est moins efficace.

L'autre étape d'envoi est une étape d'envoi, par le serveur ou par le premier terminal mobile, d'une alarme secondaire sous la forme d'un message vocal, au deuxième terminal mobile, lorsque le deuxième terminal mobile quitte ou a quitté la zone autorisée. Pour parer à un danger éventuel pour l'utilisateur du deuxième terminal mobile, par exemple l'enfant qui s'approche d'une piscine lorsqu'il a quitté la zone autorisée de la pelouse dans le jardin, un message vocal est envoyé au deuxième terminal mobile pour aider l'utilisateur du deuxième terminal mobile à gérer la situation, ce message vocal contiendra par exemple une ou plusieurs instructions ou conseils facilement compréhensibles même par un enfant très jeune. L'envoi de l'alarme secondaire est de préférence effectué dès que le deuxième terminal mobile a quitté la zone autorisée, il peut aussi y avoir un décalage temporel de manière à éviter un taux de fausses alarmes trop important si l'utilisateur du deuxième terminal mobile se déplace sur la frontière de la zone autorisée de déplacement : par exemple, l'alarme principale n'est envoyée que si le deuxième terminal mobile a quitté la zone autorisée pendant plus de 5 secondes consécutives.

Le message vocal peut être envoyé au deuxième terminal mobile, soit par le serveur, soit par le premier terminal mobile, et ceci de plusieurs manières. Selon l'une de ces manières, l'alarme secondaire est une mise en communication vocale du premier terminal mobile avec le deuxième terminal mobile ; ainsi, l'utilisateur du premier terminal mobile peut délivrer à l'utilisateur directement le message vocal qui lui semble le plus approprié, selon la position du deuxième terminal mobile sur la carte : par exemple, « ne bouge pas », « attends que papa vienne te chercher », « éloigne-toi du bassin » ... Bien sûr, l'un de ces messages ou un message général par défaut du type « ne bouge plus » ou « reviens » peut être préenregistré soit dans le premier terminal mobile soit auprès du serveur, soit même dans le deuxième terminal mobile et être activé par le premier terminal mobile ou par le serveur, tout ceci sans l'intervention de l'utilisateur du premier terminal mobile dans ce cas du message préenregistré. Le message préenregistré peut aussi être par exemple du type réprimande du genre « retourne dans ta chambre dans laquelle tu es consigné » ou même être associé à une temporisation comme du genre « ça fait déjà une heure que tu regardes la télévision dans le salon, va jouer dans ta chambre ».

De préférence, le serveur localise le deuxième terminal mobile par triangulation. Avantageusement, la triangulation est réalisée entre des bornes disposées dans le lieu, ce sont alors par exemple des bornes dédiées à la mise en oeuvre du procédé selon l'invention. D'une manière avantageuse, la densité des bornes est suffisante pour que la précision de localisation du deuxième terminal mobile soit meilleure que 10 mètres, voire meilleure que 5 mètres. La localisation peut aussi être réalisée à l'aide de stations UMTS (« Universal Mobile Telecommunications System »), en particulier lorsque les terminaux mobiles seront des terminaux de troisième génération. Le deuxième terminal mobile et le premier terminal mobile peuvent aussi être dotés chacun d'un récepteur GPS par exemple, et ainsi procéder à leur propre localisation sans l'aide du serveur proposant le procédé selon l'invention. La commutation d'une technique de localisation (à l'aide de stations UMTS par exemple) à une autre technique de localisation (par GPS par exemple) en fonction des circonstances, du lieu par exemple, est également possible.

Dans une option avantageuse, le deuxième terminal mobile comporte un déclencheur dont l'activation par l'utilisateur du deuxième terminal mobile entraîne l'étape d'envoi de l'alarme principale même si le deuxième terminal mobile n'a pas quitté la zone autorisée. Ceci est prévu pour le cas où l'enfant rencontre un problème même dans la zone autorisée de déplacement, s'il s'est perdu à l'intérieur de la zone autorisée de déplacement par exemple. De manière avantageuse, l'activation du déclencheur entraîne automatiquement la mise en communication du premier terminal mobile avec le deuxième terminal mobile. Ainsi, le parent peut tout de suite demander à l'enfant pourquoi il a déclenché le déclencheur et régler le problème directement de vive voix. Le déclencheur peut correspondre à la pression d'une ou plusieurs touches particulières par l'utilisateur du deuxième terminal mobile ou bien à la pression de n'importe quelle touche par l'utilisateur du deuxième terminal mobile.

Dans un mode de réalisation préférentiel, la carte étant prédécoupée en régions, la délimitation de la zone autorisée est réalisée par validation d'une partie des régions à l'aide du premier terminal mobile. De préférence, le serveur affiche sur l'écran du premier terminal mobile une ou des régions que le premier terminal mobile valide en tout ou partie par un simple clic ou par plusieurs simples clics, c'est-à-dire par une ou plusieurs simples pressions sur une touche. Dans le cas extrême d'une seule région validée par un simple clic, l'étape de délimitation peut correspondre à un simple acquiescement. Il est également possible de laisser l'utilisateur du premier terminal mobile dessiner lui-même la zone autorisée de déplacement sur la carte, ce qui tout en lui permettant de la personnaliser, reste tout de même plus fastidieux. La zone autorisée de déplacement peut correspondre à un périmètre extérieur englobant lui-même des endroits interdits qui n'appartiennent donc pas à la zone autorisée de déplacement. Un tel endroit interdit sera par exemple un endroit dangereux pour les enfants comme peut l'être une piscine, tandis que le périmètre extérieur sera la clôture du jardin, la zone autorisée étant par conséquent le jardin excluant la piscine.

Dans un autre mode de réalisation préférentiel, la zone autorisée de déplacement est dynamique et correspond à un périmètre autour de la position du premier terminal mobile. C'est par exemple un rayon de 20 mètres autour du premier terminal mobile. Dans ce cas lorsque le premier terminal mobile bouge, la zone autorisée de déplacement bouge également et le deuxième terminal mobile peut quitter la zone autorisée de déplacement même s'il n'a pas bougé : par exemple un enfant qui reste à la traîne dans un parc tandis que son parent continue à marcher.

De préférence, l'alarme principale est une sonnerie, et non pas un message de type SMS, de manière à pouvoir être prise en compte même par un utilisateur de premier terminal mobile qui serait distrait ou absorbé dans une occupation quelconque.

De préférence, le serveur propose automatiquement au premier terminal mobile la mise en oeuvre du procédé dès que le premier terminal mobile entre dans le lieu. Ainsi le parent n'a plus à penser à activer ce service auprès du serveur, le serveur le proposant alors par défaut dès que le parent rentre dans le parc par exemple avec son enfant, ce qui correspond à rentrée dans le parc du premier et du deuxième terminal mobile. Dans cas, la phase de communication se réduira à un simple acquiescement de la part du premier terminal mobile, le numéro du deuxième terminal mobile ayant été donné une fois pour toutes au départ ; il peut toujours être modifié ensuite.

De préférence, le lieu est un parc d'attractions. En effet, les parcs d'attractions sont grands et surpeuplés les jours d'affluence : il est donc facile pour un parent d'y perdre un enfant.

De préférence, l'étape d'affichage de la position du deuxième terminal mobile indique aussi la direction de déplacement du deuxième terminal mobile. Par exemple, cette direction peut être indiquée sous la forme d'une flèche sur la carte. Ainsi, le parent qui voit son enfant près d'un endroit dangereux peut vois si l'enfant continue de s'en approcher ou au contraire s'en éloigne. De manière avantageuse, l'étape d'affichage affiche aussi la position du premier terminal mobile. Cela permet à l'utilisateur du premier terminal mobile de repérer encore plus facilement sur la carte la position du deuxième terminal mobile grâce à la vision simultanée des deux positions, respectivement du premier et du deuxième terminal mobile, sur la carte.

## Revendications

1. Procédé comprenant :
- une étape de communication entre un premier terminal mobile et un serveur, le premier terminal mobile fournissant au serveur le numéro d'un deuxième terminal mobile ;
- une étape de délimitation par le premier terminal mobile, d'au moins une zone autorisée de déplacement sur une carte d'un lieu ;
- une étape de localisation du deuxième terminal mobile ;
- une étape d'affichage, sur l'écran du premier terminal mobile, d'une part d'au moins une partie de la carte et d'autre part de la position du deuxième terminal mobile sur la carte ;
les étapes de localisation et d'affichage étant mises à jour au cours du temps ;
- une étape d'envoi, par le serveur, d'une alarme principale, au premier terminal mobile, lorsque le deuxième terminal mobile quitte la zone autorisée ;
- une étape d'envoi, par le serveur ou par le premier terminal mobile, d'une alarme secondaire sous la forme d'un message vocal, au deuxième terminal mobile, lorsque le deuxième terminal mobile quitte ou a quitté la zone autorisée.

2. Procédé selon la revendication 1, **caractérisé en ce que** l'alarme secondaire est un message vocal préenregistré.

3. Procédé selon la revendication 1, **caractérisé en ce que** l'alarme secondaire est une mise en communication vocale du premier terminal mobile avec le deuxième terminal mobile.

4. Procédé selon l'une quelconque des revendications précédentes, **caractérisé en ce que** le serveur localise le deuxième terminal mobile par triangulation.

5. Procédé selon la revendication 4, **caractérisé en ce que** le serveur localise le deuxième terminal mobile par triangulation entre des bornes disposées dans le lieu.

6. Procédé selon la revendication 5, **caractérisé en ce que** la densité des bornes est suffisante pour que la précision de localisation du deuxième terminal mobile soit meilleure que 10 mètres.

7. Procédé selon la revendication 6, **caractérisé en ce que** la densité des bornes est suffisante pour que la précision de localisation du deuxième terminal mobile soit meilleure que 5 mètres.

8. Procédé selon l'une quelconque des revendications précédentes, **caractérisé en ce que** le deuxième terminal mobile comporte un déclencheur dont l'activation par l'utilisateur du deuxième terminal mobile entraîne l'étape d'envoi de l'alarme principale même si le deuxième terminal mobile n'a pas quitté la zone autorisée.

9. Procédé selon la revendication 8, **caractérisé en ce que** l'activation du déclencheur entraîne automatiquement la mise en communication du premier terminal mobile avec le deuxième terminal mobile.

10. Procédé selon l'une quelconque des revendications précédentes, **caractérisé en ce que**, la carte étant prédécoupée en régions, la délimitation de la zone autorisée est réalisée par validation d'une partie des régions à l'aide du premier terminal mobile.

11. Procédé selon l'une quelconque des revendications 1 à 9, **caractérisé en ce que** la zone autorisée est dynamique et correspond à un périmètre autour de la position du premier terminal mobile.

12. Procédé selon l'une quelconque des revendications précédentes, **caractérisé en ce que** l'alarme principale est une sonnerie.

13. Procédé selon l'une quelconque des revendications précédentes, **caractérisé en ce que** le serveur propose automatiquement au premier terminal mobile la mise en oeuvre du procédé dès que le premier terminal mobile entre dans le lieu.

14. Procédé selon l'une quelconque des revendications précédentes, **caractérisé en ce que** le lieu est un parc d'attractions.

15. Procédé selon l'une quelconque des revendications précédentes, **caractérisé en ce que** la localisation est réalisée par le serveur à l'aide de stations UMTS.

16. Procédé selon l'une quelconque des revendications précédentes, **caractérisé en ce que** l'étape d'affichage de la position du deuxième terminal mobile indique aussi la direction de déplacement du deuxième terminal mobile.

17. Procédé selon l'une quelconque des revendications précédentes, **caractérisé en ce que** l'étape d'affichage affiche aussi la position du premier terminal mobile.

18. Terminal mobile destiné à la mise en oeuvre du procédé selon l'une quelconque des revendications précédentes.

19. Serveur destiné à la mise en oeuvre du procédé selon l'une quelconque des revendications 1 à 17.
